# EUROPEAN PATENT SPECIFICATION

(11) **EP 3 894 774 B1**
(45) Date of publication and mention of the grant of the patent: **27.07.2022**
(21) Application number: 19835726.1
(22) Date of filing: 10.12.2019
(51) Int. Cl.: F28F 17/00, B60H 1/32, F24F 13/22

(54) **AIR CONDITIONING SYSTEM PROVIDED WITH A DROPLET SEPARATOR, IN PARTICULAR FOR A MOTOR VEHICLE**
KLIMAANLAGE MIT EINEM TRÖPFCHENABSCHEIDER, INSBESONDERE FÜR EIN KRAFTFAHRZEUG
SYSTÈME DE CLIMATISATION MUNI D'UN SÉPARATEUR DE GOUTTELETTES, EN PARTICULIER POUR UN VÉHICULE AUTOMOBILE

(30) Priority: 11.12.2018 IT 201800010959
(43) Date of publication of application: 20.10.2021
(73) Proprietor: DENSO THERMAL SYSTEMS S.p.A., 10046 Poirino (Torino) (IT)
(72) Inventor: DAVTER, Massimo, 10046 Poirino (TO) (IT); DI TONNO, Massimo, 10046 Poirino (TO) (IT); PROLA, Marcello Andres, 10046 Poirino (TO) (IT)
(74) Representative: Vitillo, Giuseppe
(86) International application number: PCT/IB2019/060603
(87) International publication number: WO 2020/121186

(56) References cited:
- EP-A1- 3 128 277
- WO-A1-2008/079121
- JP-A- 2004 060 957

## Description

### Technical field

The present invention relates to an air conditioning system, in particular for a motor vehicle.

### Background art

The use of air conditioning systems is known in the art. More specifically, so-called Heating, Ventilation and Air Conditioning systems are known, which are typically referred to as HVAC systems.

Usually such systems include a fan configured for generating an air flow in a predetermined direction and a heat exchanger assembly configured for being crossed by the air flow generated by the fan and for exchanging heat with such air flow. Downstream of the heat exchanger assembly there is also an air outlet, which is configured for delivering the air flow that has crossed the heat exchanger assembly.

Typically the heat exchanger assembly further comprises an evaporator, which cools the air flow passing through it and generated by the fan. The evaporator comprises a front side facing towards the fan and intercepting the air flow coming from the latter; it also comprises a back side opposed to the front side and facing towards the air outlet, through which the cooled air flow comes out. However, this type of evaporator employed in such systems suffers from a number of drawbacks.

One drawback is that, due to its very function, it causes the formation and accumulation of condensed water vapour, typically in droplet form, because of the thermal exchange occurring with the air flow hitting the front side of the evaporator. This may permit the droplets to be transported by the air flow exiting the evaporator, which may then reach and go through the air outlet. This condition results in undesired dripping at the air outlet, and said droplets, due to the effect of the air flow, may reach the passenger compartment of a motor vehicle in which the system has been installed.

This problem is particularly noticeable in certain applications, e.g. when the back side of the evaporator is inclined by an acute angle relative to the predetermined direction of the air flow generated by the fan, thus defining a descending tract relative to said predetermined direction.

EP 3 128 277 discloses an air conditioning system according to the preamble of claim 1 and describes an evaporator having a vertical arrangement of header pipes for an air conditioner of a vehicle. The evaporator includes a pair of header pipes disposed to face each other with a gap therebetween. Such header pipes provide a circulation path for a coolant supplied in the cooling cycle. Moreover, the header pipes discharge the coolant that has exchanged heat. There are also a plurality of lateral tubes arranged between the pair of header pipes to communicate with the latter. The lateral tubes are connected in a longitudinal direction of the header pipes. The lateral tubes also allow a coolant - which flows inside through inlets of the header pipes - to exchange heat with air while flowing in a zigzag pattern towards the outlets of the header pipes. The evaporator further comprises heat-dissipating fins disposed between the lateral tubes and dissipating the heat of vaporization from the tubes as the air supplied by the fan flows therethrough.

### Summary of the invention

It is one object of the present invention to provide a system capable of solving this and other problems of the prior art. In particular, owing to the present invention it is possible to provide a system capable of countering and significantly reducing the droplets of condensed vapour exiting the evaporator and reaching the air outlet, and then crossing it and dripping out of it.

According to the present invention, this and other objects are achieved through a system having the technical features set out in the appended independent claim.

It is to be understood that the appended claims are an integral part of the technical teachings provided in the following detailed description of the present invention. In particular, the appended dependent claims define some preferred embodiments of the present invention, which include optional technical features.

Further features and advantages of the present invention will become apparent from the following detailed description, which is provided by way of non-limiting example with particular reference to the annexed drawings, which will be summarized below.

### Brief description of the drawings

Figure 1 is a perspective side view of a Heating, Ventilation and Air Conditioning system obtained in accordance with an exemplary embodiment of the present invention.
Figure 2 is a partial sectional view taken along a sagittal plane of the system shown in Figure 1.
Figure 3 is a perspective view from above of a droplet separator included in the system shown in the preceding figures.
Figure 4 is a partial sectional view taken along a front plane of the droplet separator visible in Figures 2 and 3.

For the sake of completeness, the following is a list of the alphanumerical references used herein to designate parts, elements and components illustrated in the above-described drawings.
AF. Air flow
X. Predetermined direction
Y. Rotation axis
10. Heating, Ventilation and Air Conditioning system (HVAC system)
11. Casing
12. Fan
13. Air inlet
14. Heat exchanger assembly
15. Impeller
16. Air outlet
18. Evaporator
20. Heater core
22. Front side
24. Back side
26. Droplet separator
28. Shaped fins
30. Concave portion
32. Curved portion
34. Holder
36. Seat
38. Sensor

### Detailed description of the invention

With reference to the annexed drawings, 10 designates as a whole an air conditioning system, in particular for a motor vehicle, such system being obtained in accordance with an exemplary embodiment of the present invention.

In the embodiment illustrated herein by way of non-limiting example, the system 10 is a Heating, Ventilation and Air Conditioning system, also referred to as HVAC system.

As will be apparent to a person skilled in the art, the system 10 can be configured for use in a motor vehicle of any kind and typology, e.g. a passenger car, a commercial vehicle, an industrial vehicle, a military vehicle, a vehicle for building sites, a sports car, a sport utility vehicle (SUV), an agricultural machine, a train, a bus, etc. In particular, the system 10 can be configured for installation in the passenger compartment or cabin of the motor vehicle.

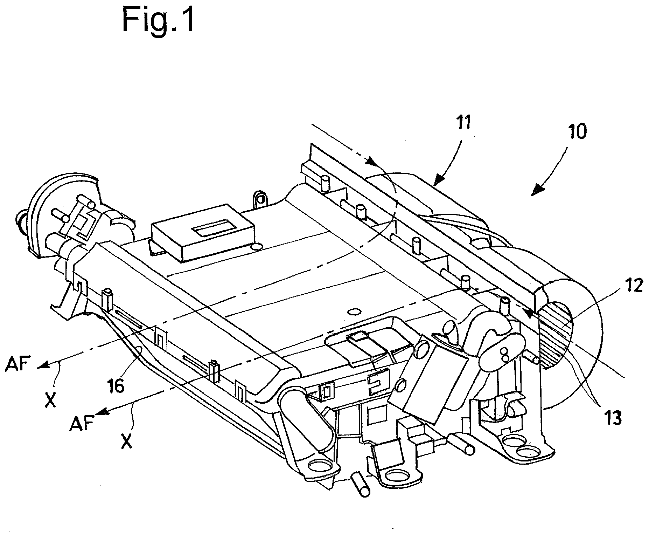

In Figure 1, the system 10 is illustrated with exemplary indications of the paths followed by the incoming and outgoing air flow. Advantageously but not necessarily, in the embodiment shown in Figure 1 the system 10 has a casing 11 with a pair of air inlets 13 (only one of which is visible) and an air outlet 16. In particular, the air inlets 13 are arranged laterally, whereas the air outlet 16 is arranged axially in the back.

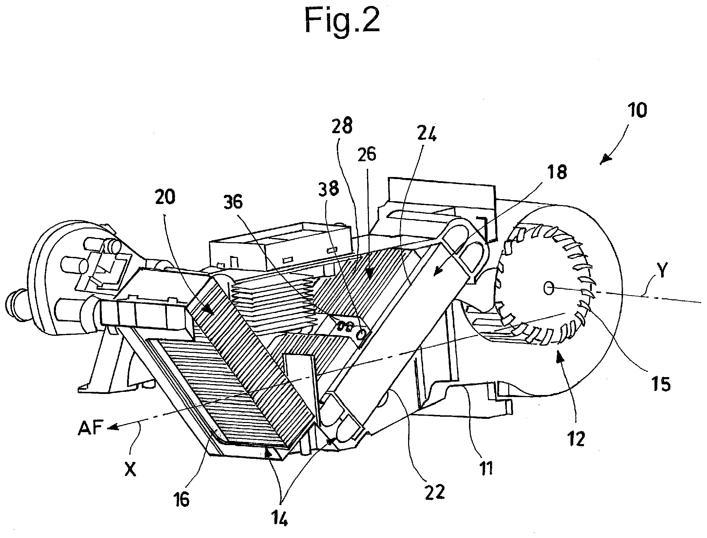

With particular reference to Figure 2, the system 10 comprises a fan 12 configured for generating an air flow AF in a predetermined direction, indicated by arrow X.

The system 10 further comprises a heat exchanger assembly 14 configured for being crossed by the air flow AF generated by such fan. The heat exchanger assembly 14 is configured for exchanging heat with the air flow AF in a controlled manner, e.g. for air dehumidification purposes.

In the illustrated embodiment, the fan 12 is shown to be located, for example, upstream of the heat exchanger assembly 14. However, this should not be understood in a limitative manner, since in further variant embodiments such fan 12 may be located downstream of the heat exchanger assembly 14, and - in case - also outside the above cited casing 11.

Furthermore, the system 10 has the air outlet 16 located downstream of the heat exchanger assembly 14. The air outlet 16 is configured for delivering the air flow AF that has crossed the heat exchanger assembly 14.

In the embodiment herein illustrated by way of a non-limiting example, as mentioned above, the casing 11 internally houses the fan 12 and the heat exchanger assembly 14.

In the embodiment illustrated herein by way of non-limiting example, with particular reference to Figure 2, the fan 12 is a centrifugal or radial fan. In particular, the fan 12 is configured for taking in air along the rotation axis Y of the impeller 15, in particular through the pair of air inlets 13, and for delivering it in the predetermined direction X, which is substantially perpendicular to the rotation axis Y, in particular through the air outlet 16.

The heat exchanger assembly 14 comprises an evaporator 18 configured for cooling the air flow AF passing through it. In the illustrated embodiment, the heat exchanger assembly 14 further comprises a heater core 20, which is configured for heating the air flow AF.

In the example shown in the drawings, the evaporator 18 is optionally located downstream of the fan 12.

In the illustrated embodiment, the evaporator 18 has a substantially parallelepiped shape.

The evaporator 18 comprises a front surface or side 22 facing towards the fan 12. The front face 22 is configured for intercepting - and being crossed by - the air flow AF generated by the fan 12. Moreover, the evaporator 18 comprises a back surface or side 24 located at an opposed position relative to the front side 22 and facing towards the air outlet 16. In its turn, the back side 24 is configured for being crossed by - and letting out - the cooled air flow AF.

In the embodiment illustrated herein by way of non-limiting example, the back side 24 of the evaporator 18 is inclined by an acute angle (typically up to approximately 30°) relative to the predetermined direction X of the air flow AF generated by the fan 12; in particular, the back side 24 defines a descending tract or surface relative to said predetermined direction.

When the system 10 is in use, the cooling effected by the evaporator 18 causes the formation and accumulation of condensed water vapour, typically in droplet form, on the back side 24, due to the thermal exchange occurring with the air flow AF.

The system 10 further comprises a droplet separator 26 situated downstream of and in proximity to the evaporator 18.

More in detail, the droplet separator 26 is located downstream of and in proximity to the back side 24 of the evaporator 18. The droplet separator 26 is configured for deviating the droplets taken from said air flow AF from the back side 24 of the evaporator 18, so as to prevent the donwflow thereof towards the air outlet 16.

This aspect is particularly advantageous in the embodiment illustrated herein by way of example, wherein the back side 24 defines a descending tract or surface relative to the air flow AF generated by the fan 12. In this condition, the droplets will tend to form and gather at the bottom, falling by gravity along the descending tract or surface of the back side 24.

Preferably, the droplet separator 26 may be either adjacent to the back side 24 or mounted separately inside the casing 11.

In the illustrated embodiment, the droplet separator 26 is mounted on the back side 24 of the evaporator 18.

Advantageously but not necessarily, the droplet separator 26 completely covers the back side 24 of the evaporator 18.

A further advantage given by the use of the droplet separator 26 is that it contributes to uniform the air flow AF exiting the evaporator 18.

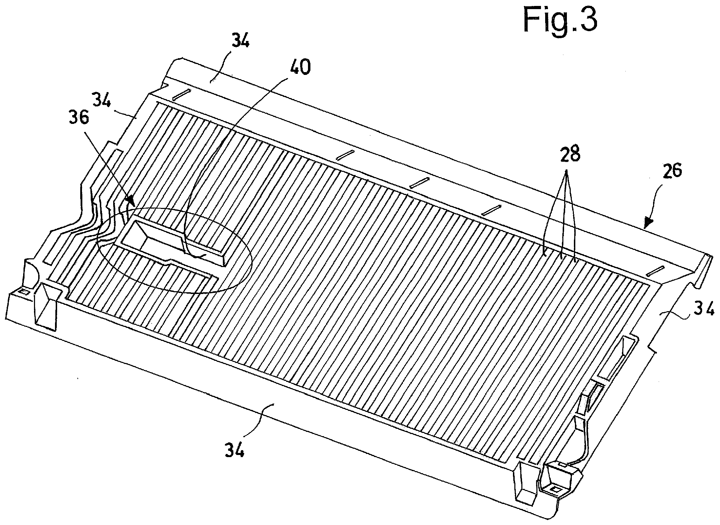

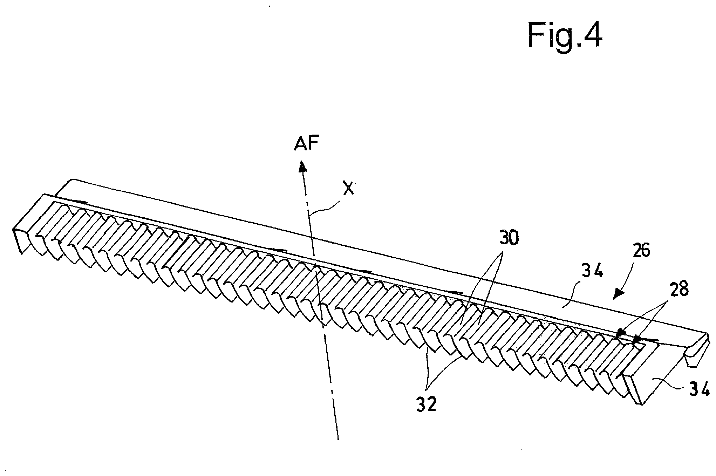

In the illustrated embodiment, with particular reference to Figures 3 and 4, the droplet separator 26 comprises a plurality of shaped fins 28 arranged side by side.

In particular, the shaped fins 28 have a mainly longitudinal extension. More in particular, the shaped fins 28 are oriented on the back side 24 of the evaporator 16 with their length inclined downwards, in a direction correspondent with the descending tract or surface of said back side.

Preferably, with reference to Figure 4, each one of the shaped fins 28 has a corrugated cross-section. More preferably, in a cross-sectional view, each shaped fin 28 has, at its top, a concave portion 30 having its concavity facing towards the back side 24 of the evaporator 16. The concave portion 30 tends to intercept the droplets deposited on the back side 24 and pushed by the air flow AF generated by the fan 12.

In the illustrated embodiment, each one of the fins 28 has a curved portion 32 that connects to the concave portion 30. The curved portion 32 contributes to guiding the droplets towards the latter. In particular, the curved portion 32 has a substantially convex shape.

In a preferred manner, the droplet separator 26 comprises a holder 34 that supports the shaped fins 28. The holder 34 is mounted on the back side 24 of the evaporator 18.

In the illustrated embodiment, the holder 34 delimits and supports laterally the longitudinal ends of the shaped fins 28. In particular, the holder 34 defines a perimetric frame of the droplet separator 26, surrounding and supporting the shaped fins 28.

A further advantage is given by that the droplet separator can be used as a mounting jig for possible accessories.

Preferably, in the illustrated embodiment the droplet separator 26 may optionally have a seat 36 for housing a sensor 38 (only visible in Figure 2). In the illustrated embodiment, the seat 36 is facing to and accessible at the air outlet 16, away from the evaporator 18.

Clearly, the use of the sensor 38 housed in the seat 36 is advantageous but merely optional within the scope of the present invention.

In the embodiment illustrated herein by way of non-limiting example, the seat 36 is provided by interruptions made in the length of the shaped fins 28. Such interrupted fins join into transversal edges 40 which delimit the housing defined by the seat 36 in which the sensor 38 can be inserted.

In particular, the sensor 38 is configured for detecting at least one parameter representative of the physical-chemical properties of the air flow AF generated by the fan 12 and exiting the evaporator 18. As it will be apparent to a person skilled in the art, in further variant embodiments it is also possible to provide a plurality of such seats on the droplet separator in order to house a corresponding plurality of sensors configured for detecting several parameters of the air flow exiting the evaporator.

In the embodiment illustrated herein by way of non-limiting example, the sensor 38 is a temperature sensor configured for detecting the temperature of the air flow AF when said air flow exits the evaporator 18 and crosses the droplet separator 26. However, as it will be apparent to a person skilled in the art, it is also conceivable to use and/or combine different sensors on the droplet separator (e.g. a humidity sensor, or the like, in addition to the temperature sensor).

The use of the droplet separator 26 described herein has proven to be particularly advantageous when the system 10 operates in extreme conditions, e.g. when the system 10 is inclined of 30° in any direction in the motor vehicle in which it has been installed, or in the presence of strong vibrations. For example, such conditions are typically and commonly found when driving off-road.

The embodiments and the implementation details may be widely varied from those described and illustrated herein by way of non-limiting example, without thereby departing from the scope of the invention which is defined by the appended claims.

## Claims

1. Air conditioning system (10), in particular for a motor vehicle; said system having:
- a fan (12) configured for generating an air flow (AF) in a predetermined direction (X);
- a heat exchanger assembly (14) configured for being crossed by the air flow (AF) generated by said fan (12) and for exchanging heat with said air flow (AF) in a controlled manner; and
- an air outlet (16) located downstream of said heat exchanger assembly (14) and configured for delivering said air flow (AF);
said heat exchanger assembly (14) comprising an evaporator (18) configured for cooling said air flow (AF) and comprising a back surface or side (24) facing towards said air outlet (16) and configured for being crossed by said cooled air flow (AF);
said system further comprising a droplet separator (26) located downstream of and in proximity to said back surface or side (24) of said evaporator (18);
said droplet separator (26) being configured for deviating droplets of water vapour condensed on said back surface or side (24) and taken from said air flow (AF), so as to prevent the downflow of said droplets of water vapour towards said air outlet (16);
said droplet separator (26) comprising a plurality of shaped fins (28) arranged side by side;
**characterized in that** said droplet separator (26) is separated from said back side (24) of said evaporator (18);
**in that** said droplet separator (26) further comprises a holder (34) that supports said shaped fins (28), delimiting and supporting laterally the longitudinal ends of said shaped fins (28); and
**in that** said holder (34) defines a perimetric frame of said droplet separator (26), surrounding said shaped fins (28) .

2. System according to claim 1, wherein said droplet separator (26) has at least one seat (36) for housing a respective sensor (38).

3. System according to claim 2, wherein said seat (36) is facing to and accessible at the air outlet (16), away from said evaporator (18).

4. System according to claim 2 or 3, wherein said seat (36) is provided by interruptions made in the length of said shaped fins (28).

5. System according to claim 4, wherein said interruptions of said shaped fins (28) join into transversal edges (40) which delimit the housing defined by the seat (36) in which the sensor (38) is configured to be inserted.

6. System according to any of claims 2 to 5, wherein said sensor (38) is configured for detecting at least one parameter representative of the physical-chemical properties of said air flow (AF) cooled by said evaporator (18) .

7. System according to claim 1, wherein said shaped fins (28) have a prevalently longitudinal extension.

8. System according to claim 1 or 2, wherein each one of said shaped fins (28) has a corrugated cross-section.

9. System according to claim 8, wherein each one of said shaped fins (28) has at its top a concave portion (30) having its concavity facing towards said back side (24) of said evaporator (18); said concave portion (30) tending to intercept said droplets of water vapour condensed on said back side (24) and pushed by said air flow (AF).

10. System according to claim 9, wherein each one of said shaped fins (28) has a curved portion (32) that connects to said concave portion (30); said curved portion (32) contributing to guiding said droplets of water vapour towards said concave portion (30).

11. System according to any one of the preceding claims, wherein said back side (24) of said evaporator (18) defines a descending tract or surface relative to said predetermined direction (X) of said air flow (AF) generated by said fan (12) and cooled by said evaporator (18).

## Patentansprüche

1. Klimaanlage (10), insbesondere für ein Kraftfahrzeug; wobei die Anlage aufweist:
- ein Gebläse (12), das konfiguriert ist, einen Luftstrom (AF) in einer vorgegebenen Richtung (X) zu erzeugen;
- eine Wärmetauscheranordnung (14), die konfiguriert ist, von dem durch das Gebläse (12) erzeugten Luftstrom (AF) durchströmt zu werden und mit dem Luftstrom (AF) auf kontrollierte Weise Wärme auszutauschen; und
- einen Luftauslass (16), der sich stromabwärts der Wärmetauscheranordnung (14) befindet und konfiguriert ist, den Luftstrom (AF) abzugeben;
wobei die Wärmetauscheranordnung (14) einen Verdampfer (18) aufweist, der zum Kühlen des Luftstroms (AF) konfiguriert ist, und eine Rückfläche oder Seite (24) aufweist, die dem Luftauslass (16) zugewandt und konfiguriert ist, von dem gekühlten Luftstrom (AF) durchströmt zu werden;
wobei die Anlage ferner einen Tröpfchenabscheider (26) aufweist, der stromabwärts von und in der Nähe der Rückfläche oder Seite (24) des Verdampfers (18) angeordnet ist;
wobei der Tröpfchenabscheider (26) konfiguriert ist, Tröpfchen von Wasserdampf, die auf der Rückfläche oder Seite (24) kondensiert sind und dem Luftstrom (AF) entnommen werden, abzulenken, um die Abwärtsströmung der Wasserdampftröpfchen in Richtung des Luftauslasses (16) zu verhindern;
wobei der Tröpfchenabscheider (26) eine Vielzahl von geformten Rippen (28) aufweist, die nebeneinander angeordnet sind;
**dadurch gekennzeichnet, dass** der Tröpfchenabscheider (26) von der Rückseite (24) des Verdampfers (18) getrennt ist;
dass der Tröpfchenabscheider (26) ferner einen Halter (34) aufweist, der die geformten Rippen (28) trägt und die Längsenden der geformten Rippen (28) seitlich begrenzt und trägt; und
dass der Halter (34) einen Umfangsrahmen des Tröpfchenabscheiders (26) definiert, der die geformten Rippen (28) umgibt.

2. Anlage nach Anspruch 1, wobei der Tröpfchenabscheider (26) mindestens einen Sitz (36) zur Aufnahme eines entsprechenden Sensors (38) aufweist.

3. Anlage nach Anspruch 2, wobei der Sitz (36) dem Luftauslass (16) zugewandt und von dem Verdampfer (18) weg zugänglich ist.

4. Anlage nach Anspruch 2 oder 3, wobei der Sitz (36) durch Unterbrechungen in der Länge der geformten Rippen (28) gebildet wird.

5. Anlage nach Anspruch 4, **dadurch gekennzeichnet, dass** die Unterbrechungen der geformten Rippen (28) in Querkanten (40) übergehen, die das durch den Sitz (36) definierte Gehäuse begrenzen, in das der Sensor (38) zum Einsetzen konfiguriert ist.

6. Anlage nach einem der Ansprüche 2 bis 5, wobei der Sensor (38) konfiguriert ist, mindestens einen Parameter zu erfassen, der für die physikalisch-chemischen Eigenschaften des von dem Verdampfer (18) gekühlten Luftstroms (AF) repräsentativ ist.

7. Anlage nach Anspruch 1, wobei die geformten Rippen (28) eine überwiegend längliche Ausdehnung haben.

8. Anlage nach Anspruch 1 oder 2, wobei jede der geformten Rippen (28) einen gewellten Querschnitt aufweist.

9. Anlage nach Anspruch 8, wobei jede der geformten Rippen (28) an ihrer Oberseite einen konkaven Abschnitt (30) aufweist, dessen Konkavität der Rückseite (24) des Verdampfers (18) zugewandt ist; wobei der konkave Abschnitt (30) dazu neigt, die auf der Rückseite (24) kondensierten und von dem Luftstrom (AF) geschobenen Wasserdampftröpfchen abzufangen.

10. Anlage nach Anspruch 9, wobei jede der geformten Rippen (28) einen gekrümmten Abschnitt (32) aufweist, der mit dem konkaven Abschnitt (30) verbunden ist; wobei der gekrümmte Abschnitt (32) dazu beiträgt, die Wasserdampftröpfchen zu dem konkaven Abschnitt (30) zu führen.

11. Anlage nach einem der vorhergehenden Ansprüche, wobei die Rückseite (24) des Verdampfers (18) einen abfallenden Trakt oder eine abfallende Fläche in Bezug auf die vorbestimmte Richtung (X) des von dem Gebläse (12) erzeugten und von dem Verdampfer (18) gekühlten Luftstroms (AF) definiert.

## Revendications

1. Système de climatisation (10), en particulier pour véhicule motorisé ; ledit système ayant :
- un ventilateur (12) configuré pour générer un flux d'air (AF) dans une direction prédéterminée (X) ;
- un ensemble échangeur de chaleur (14) configuré pour être traversé par le flux d'air (AF) généré par ledit ventilateur (12) et pour échanger de la chaleur avec ledit flux d'air (AF) d'une manière commandée ; et
- une sortie d'air (16) située en aval dudit ensemble échangeur de chaleur (14) et configurée pour délivrer ledit flux d'air (AF) ;
ledit ensemble échangeur de chaleur (14) comprenant un évaporateur (18) configuré pour refroidir ledit flux d'air (AF) et comprenant une surface ou un côté arrière (24) faisant face à ladite sortie d'air (16) et configuré pour être traversé par ledit flux d'air refroidi (AF) ;
ledit système comprenant en outre un séparateur de gouttelettes (26) situé en aval et à proximité de ladite surface ou dudit côté arrière (24) dudit évaporateur (18) ;
ledit séparateur de gouttelettes (26) étant configuré pour dévier des gouttelettes de vapeur d'eau condensées sur ladite surface ou ledit côté arrière (24) et prélevées dudit flux d'air (AF), de manière à empêcher le flux descendant desdites gouttelettes de vapeur d'eau vers ladite sortie d'air (16) ;
ledit séparateur de gouttelettes (26) comprenant une pluralité d'ailettes profilées (28) disposées côte à côte ;
**caractérisé en ce que** ledit séparateur de gouttelettes (26) est séparé dudit côté arrière (24) dudit évaporateur (18) ;
**en ce que** ledit séparateur de gouttelettes (26) comprend en outre un dispositif de soutien (34) qui supporte lesdites ailettes profilées (28), délimitant et supportant latéralement les extrémités longitudinales desdites ailettes profilées (28) ; et
**en ce que** ledit support (34) définit un cadre périmétrique dudit séparateur de gouttelettes (26), entourant lesdites ailettes profilées (28).

2. Système selon la revendication 1, dans lequel ledit séparateur de gouttelettes (26) a au moins un siège (36) pour loger un capteur respectif (38).

3. Système selon la revendication 2, dans lequel ledit siège (36) fait face à la sortie d'air (16), et est accessible au niveau de celle-ci, à l'opposé dudit évaporateur (18).

4. Système selon la revendication 2 ou 3, dans lequel ledit siège (36) est fourni par des coupures réalisées dans la longueur desdites ailettes profilées (28).

5. Système selon la revendication 4, dans lequel lesdites coupures desdites ailettes profilées (28) se rejoignent en bords transversaux (40) qui délimitent le logement défini par le siège (36) dans lequel le capteur (38) est configuré pour être inséré.

6. Système selon l'une quelconque des revendications 2 à 5, dans lequel ledit capteur (38) est configuré pour détecter au moins un paramètre représentatif des propriétés physico-chimiques dudit flux d'air (AF) refroidi par ledit évaporateur (18).

7. Système selon la revendication 1, dans lequel lesdites ailettes profilées (28) ont une extension principalement longitudinale.

8. Système selon la revendication 1 ou 2, dans lequel chacune desdites ailettes profilées (28) a une coupe transversale ondulée.

9. Système selon la revendication 8, dans lequel chacune desdites ailettes profilées (28) a au niveau de son sommet une partie concave (30) ayant sa concavité faisant face audit côté arrière (24) dudit évaporateur (18) ; ladite partie concave (30) s'occupant d'intercepter lesdites gouttelettes de vapeur d'eau condensées sur ledit côté arrière (24) et poussées par ledit flux d'air (AF).

10. Système selon la revendication 9, dans lequel chacune desdites ailettes profilées (28) a une partie incurvée (32) qui se raccorde à ladite partie concave (30) ; ladite partie incurvée (32) contribuant à guider lesdites gouttelettes de vapeur d'eau vers ladite partie concave (30) .

11. Système selon l'une quelconque des revendications précédentes, dans lequel ledit côté arrière (24) dudit évaporateur (18) définit une voie ou surface descendante par rapport à ladite direction prédéterminée (X) dudit flux d'air (AF) généré par ledit ventilateur (12) et refroidi par ledit évaporateur (18).
